# EUROPEAN PATENT SPECIFICATION

(11) **EP 2 707 168 B1**
(45) Date of publication and mention of the grant of the patent: **23.09.2015**
(21) Application number: 12724157.8
(22) Date of filing: 10.05.2012
(51) Int. Cl.: B23K 9/12, B23K 9/133, B23K 9/173

(54) **FLUX CORED ARC WELDING SYSTEM AND METHOD WITH HIGH DEPOSITION RATE AND WELD WITH ROBUST IMPACT TOUGHNESS**
LICHTBOGENSCHWEISSSYSTEM UND -VERFAHREN MIT FLUSSMITTELSEELE UND HOHER ABSCHEIDUNGSRATE SOWIE VERSCHWEISSUNG MIT ROBUSTER SCHLAGZÄHIGKEIT
SYSTÈME ET METHODE DE SOUDAGE À L'ARC AVEC FIL FOURRÉ PRÉSENTANT UNE VITESSE DE DÉPÔT ÉLEVÉE ET UNE SOUDURE PRÉSENTANT UNE RÉSISTANCE ÉLEVÉE À L'IMPACT

(30) Priority: 10.05.2011 US 201113104952
(43) Date of publication of application: 19.03.2014
(73) Proprietor: Lincoln Global, Inc., City of Industry, CA 91748 (US)
(72) Inventor: MCFADDEN, Lisa, Cleveland, OH 4111 (US); NARAYANAN, Badri, K., Shaker Heights, OH 4124 (US); JOHANSSON, Sev, Cleveland Heights, OH 44121 (US)
(74) Representative: Grosse Schumacher Knauer von Hirschhausen
(86) International application number: PCT/IB2012/000899
(87) International publication number: WO 2012/153177

(56) References cited:
- WO-A1-01/62424
- FR-A- 896 931
- JP-A- 61 212 480
- US-A- 2 837 627
- US-A- 3 274 371
- US-A- 4 088 866

## Description

The present disclosure relates to an arc welding system and a method of operating a welding system according to the preamble of claims 1 and 9 (see, for example, US 4 088 866 A), and more specifically, to a flux cored arc welding system with a high deposition rate creating a weld with robust impact toughness.

### BACKGROUND

Welding is an important process in the manufacture and construction of various products and structures. Applications for welding are widespread and used throughout the world including, for example, the construction and repair of ships, buildings, bridges, vehicles, and pipe lines, to name a few. Welding is performed in a variety of locations, such as in a factory with a fixed welding operation or on site with a portable welder.

In automated or mechanized welding a user/operator (i.e. welder) programs or instructs welding equipment to make a weld. For example, in Submerged Arc Welding (SAW) a consumable solid or tubular (flux cored) electrode may be continuously fed into a molten weld or arc zone that is protected from atmospheric contamination by being "submerged" under flux such as a blanket of granular fusible material consisting of lime, silica, manganese oxide, calcium fluoride, or other suitable compounds. For example, this type of welding may be self-shielded or gas shielded. Generally, in either case, when molten, the flux becomes conductive, and provides a current path between the electrode and the work. A thick layer of flux completely covering the molten metal may thus prevent spatter and sparks as well as suppress the intense ultraviolet radiation and fumes that may be a part of the arc welding process. In such a process, currents ranging from 300 to 2000 A may be utilized. Additionally, currents of up to 5000 A may be used with multiple arcs. Single or multiple electrode wire variations of the process exist. Also, DC or AC power can be used, and/or combinations of DC and AC in multiple electrode systems. Generally, constant voltage welding power supplies are most commonly used; however, constant current systems in combination with a voltage sensing wire-feeder are also available.

In manual or semi-automated welding a user/operator (i.e. welder) directs welding equipment to make a weld. For example, in electric arc welding the welder may manually position a welding rod or welding wire and produce a heat generating arc at a weld location. In this type of welding, the spacing of the electrode from the weld location is related to the arc produced and to the achievement of optimum melting/fusing of the base and welding rod or wire metals. The quality of such a weld is often directly dependant upon the skill of the welder.

### SUMMARY OF THE INVENTION

This invention relates to welding systems with a high deposition rate creating a weld with high robust impact toughness.

According to the present invention, an arc welding system is defined in claim 1 and a method of operating a welding system is defined in claim 7.

The welding wire includes at least two distinct types of welding electrodes.

Various aspects and embodiments will become apparent to those skilled in the art from the following detailed description, the accompanying drawings and the claims.

### BRIEF DESCRIPTION OF THE DRAWINGS

Fig. 1 is a schematic diagram of a welding system with twin wire delivery;
Fig. 2 is a schematic diagram of a welding system with single lead/single trail tandem wire delivery;
Fig. 3 is a schematic diagram of a welding system with single lead/twin trail wire delivery;
Fig 4 is a schematic diagram of a welding system with twin lead/single trail wire delivery; and
Fig 5 is a schematic diagram of a welding system with twin lead/twin trail wire delivery.

### DETAILED DESCRIPTION

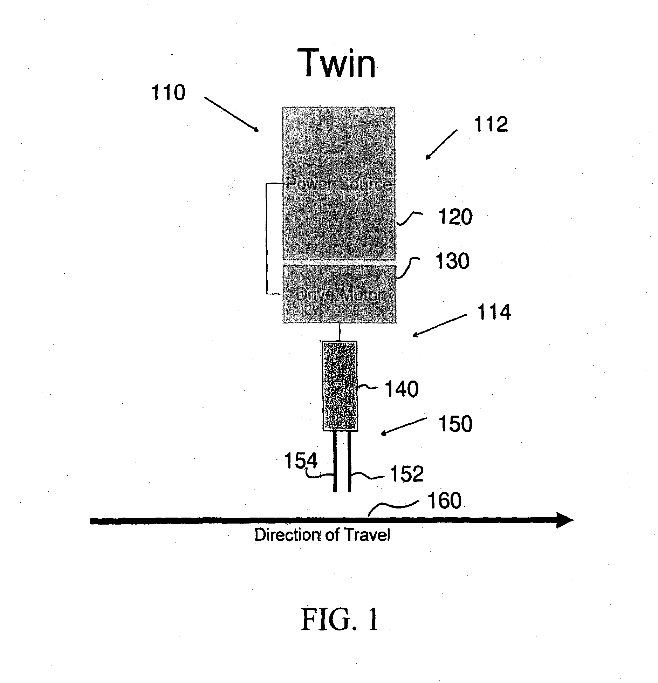

Referring now to the drawings, FIG. 1 illustrates an arc welding system 110 in accordance with one embodiment. The arc welding system 110 includes a welding power supply 112 and a wire feeding mechanism 114.

In the welding system 110, the welding power supply 112 includes a welding power source 120 and the wire feeding mechanism 114 includes a drive motor 130 and a twin wire feeder 140.

Driven by the drive motor 130, the twin wire feeder 140 delivers welding wire 150 to a welding operation on workpiece 160. The welding wire 150 includes a first welding electrode 152 and a second welding electrode 154. The workpiece 160 is illustrated as moving relative to the welding system 110. However, it must be understood that it may be either the welding system 110 or the workpiece 160 that is actually physically displaced. During the welding operation, the welding power supply 112 generates a current for welding to the welding wire 150. In the present example the welding power source 120 of the welding power supply 112 is the source of welding power for both of the first and second welding electrodes 152 and 154.

The first and second welding electrodes 152 and 154 are two distinct types of welding electrodes. According to the present invention, the first and second welding electrode 152 and 154 are both some type of flux cored electrode that differ in chemical composition.

In operation the arc welding system 110 delivers the two distinct types of welding electrode, e.g. the first and second welding electrodes 152 and 154 to a welding operation. The first and second welding electrodes 152 and 154 are delivered with twin wire delivered by the twin wire feeder 140. During the welding operation high deposition rates are achieved with the two distinct first and second flux cored electrodes 152 and 154 delivered to a twin arc welding process. By varying the composition of the first and second electrodes 152 and 154, x-ray quality welds with robust impact properties can be made, for example, with deposition rates greater than 6.804 kg/hr (15 lbs/hr).

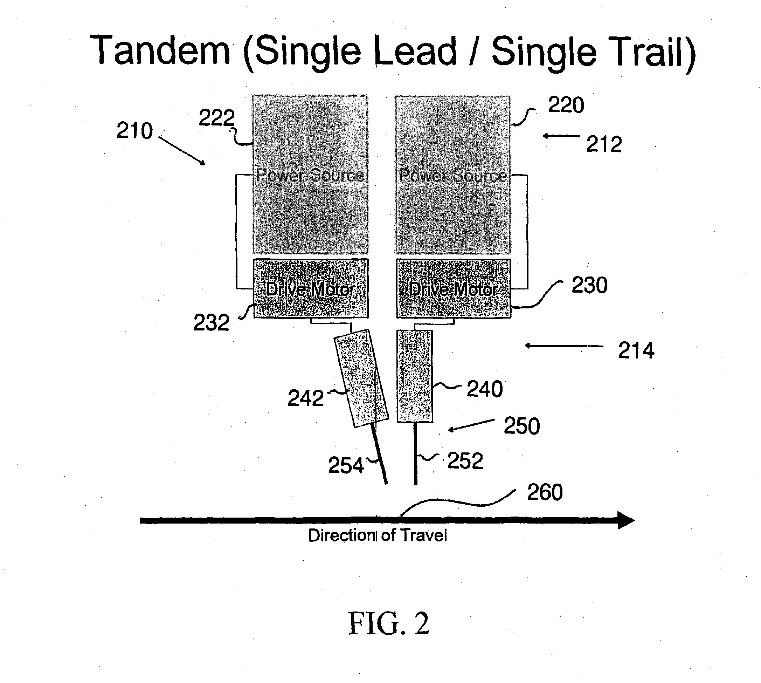

There is illustrated in Fig. 2, an arc welding system 210 in accordance with another embodiment. The arc welding system 210 includes a welding power supply 212 and a wire feeding mechanism 214.

In the welding system 210, the welding power supply 212 includes a first welding power source 220 and a second welding power source 222. The wire feeding mechanism 214 includes a first drive motor 230 and a second drive motor 232. The wire feeding mechanism 214 also includes a first wire feeder 240 and second wire feeder 242.

Driven by the drive motors 230 and 232, the tandem wire feeders 240 and 242 deliver welding wire 250 to a welding operation on workpiece 260. The welding wire 250 includes a first welding electrode 252 and a second welding electrode 254. The workpiece 260 is illustrated as moving relative to the welding system 210. However, it must be understood that it may be either the welding system 210 or the workpiece 260 that is actually physically displaced. During the welding operation, the welding power supply 212 generates a current for welding to the welding wire 250. In the present example the welding power sources 220 and 222 of the welding power supply 212 are the sources of welding power for each of the first and second welding electrodes 252 and 254 respectively

The first and second welding electrodes 252 and 254 are two distinct types of welding electrodes. According to the present invention, the first and second welding electrode 252 and 254 are both some type of flux cored electrode that differ in chemical composition.

In operation the arc welding system 210 delivers the two distinct types of welding electrode, e.g. the first and second welding electrodes 252 and 254 to a welding operation. The first and second welding electrodes 252 and 254 are delivered with tandem wire delivered by the tandem wire feeders 240 and 242. During the welding operation high deposition rates are achieved with the two distinct first and second flux cored electrodes 252 and 254 delivered to a twin arc welding process. By varying the composition of the first and second electrodes 252 and 254, x-ray quality welds with robust impact properties can be made, for example, with deposition rates greater than 6.804 kg/hr (15 lbs/hr).

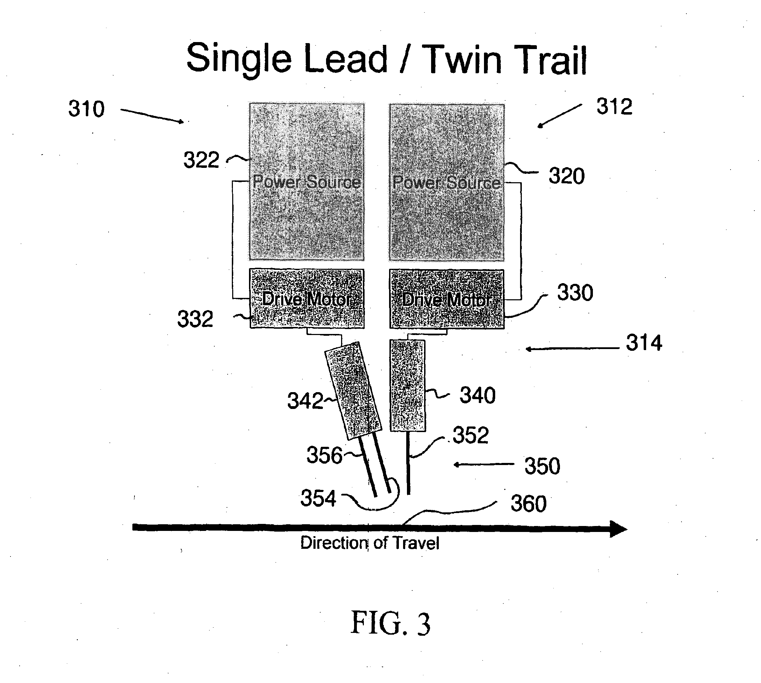

There is illustrated in Fig. 3, an arc welding system 310 in accordance with yet another embodiment. The arc welding system 310 is similar to the arc welding systems 110 and 210 of Figs. 1 and 2, expect as described below. Similar components are identified with similar identifiers. The arc welding system 310 includes a tandem wire feeding mechanism 314, which includes a single lead wire feeder 340 and a twin trail wire feeder 342. Together the single lead wire feeder 340 and the twin trail wire feeder 342 deliver first, second and third welding electrodes 352, 354 and 356. At least one of the first, second and third welding electrodes 352, 354 and 356 is a different type of electrode than the other two. It must be understood that this may be the first electrode 352 or either of the second or third electrodes 354 and 354. Additionally, it must be understood that it is contemplate that all three of the first, second and third electrodes 352, 354 and 356 are of differing types.

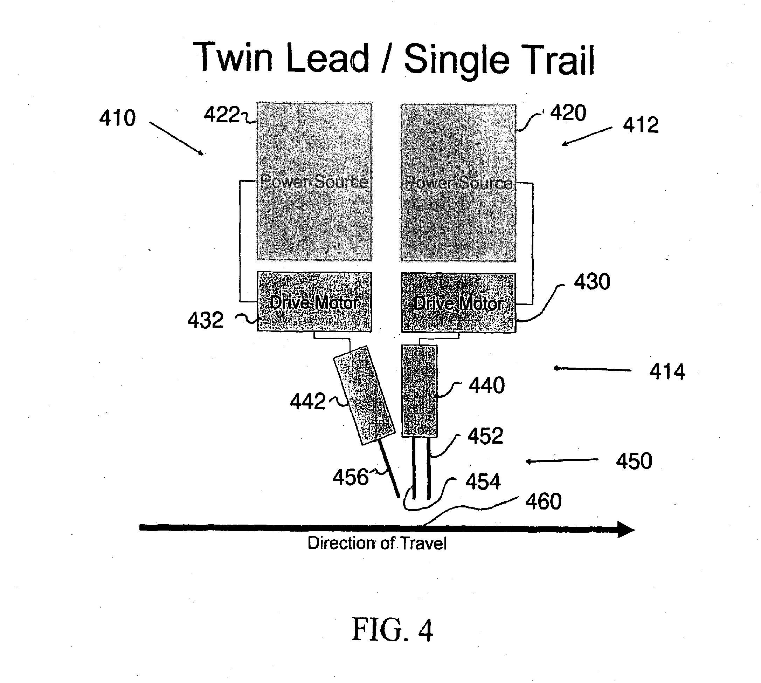

There is illustrated in Fig. 4, an arc welding system 410 in accordance with a further embodiment. The arc welding system 410 is similar to the arc welding system 310 of Fig. 3 expect as including a tandem wire feeding mechanism 414, which includes a twin lead wire feeder 440 and a single trail wire feeder 442. Similar components are identified with similar identifiers.

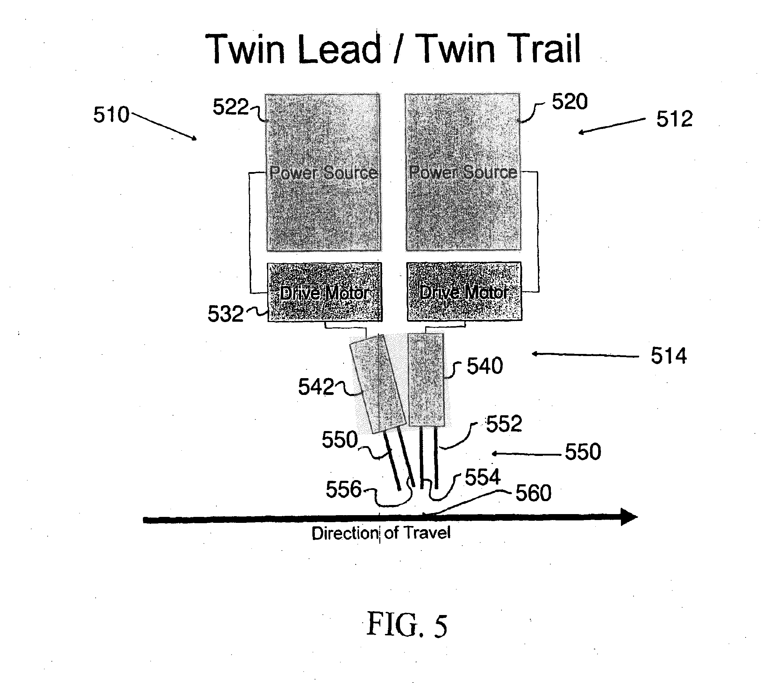

There is illustrated in Fig. 5, an arc welding system 510 in accordance with a yet further embodiment. The arc welding system 510 is similar to the arc welding systems 310 and 410 of Figs. 3 and 4, expect as including a tandem wire feeding mechanism 514, which includes a twin lead wire feeder 540 and a twin trail wire feeder 542. Similar components are identified with similar identifiers.. At least one of the first, second, third and fourth welding electrodes 552, 554, 556, and 558 is a different type of electrode than the other three. It must be understood it is contemplated that two of the electrodes may be of one type with the other two are of another type. It may be that the first and second electrodes 552 and 554 are of one type whole the third and fourth electrodes 556 and 558 are another, or , for further example the first and third electrodes 552 and 556 may be of one type with the second and fourth 554 and 558 are of another.

Thus, in at least one embodiment, high deposition rates are achieved with flux cored electrodes using a Tandem and/or Twin Arc welding process. It is contemplated that the use of at least two distinct types welding electrodes will enable a minimization of aluminum levels in the weld system, resulting in higher toughness, and higher productivity. It is further contemplated that by differing the composition and/or sizes of at least two electrodes, x-ray quality welds with robust impact properties can be made with deposition rates greater than 6.804 kg/hr (15 lbs/hr).

The invention is applicable to manual welding or semi-automated welding, and may also be used for automated welding or mechanized welding.

While principles and modes of operation have been explained and illustrated with regard to particular embodiments, it must be understood, however, that this may be practiced otherwise than as specifically explained and illustrated without departing from its scope.

### Reference numbers:

- 110: arc welding system
- 112: welding power supply
- 114: wire feeding mechanism
- 120: welding power source
- 130: drive motor
- 140: twin wire feeder
- 150: welding wire
- 152: first welding electrode
- 154: second welding electrode
- 160: workpiece
- 210: arc welding system
- 212: welding power supply
- 214: wire feeding mechanism
- 220: first welding power source
- 222: second welding power source
- 230: first drive motor
- 232: second drive motor
- 240: first wire feeder
- 242: second wire feeder
- 250: welding wire
- 252: first welding electrode
- 254: second welding electrode
- 260: workpiece
- 310: arc welding system
- 314: tandem wire feeding mechanism
- 340: lead wire feeder
- 342: twin trail wire feeder
- 352: first welding electrode
- 354: second welding electrode
- 356: third welding electrode
- 410: arc welding system
- 414: tandem wire feeding mechanism
- 440: twin lead wire feeder

- 442: trail wire feeder
- 510: arc welding system
- 514: tandem wire feeding mechanism
- 540: twin lead wire feeder
- 542: twin trail wire feeder
- 552: first welding electrode
- 554: second welding electrode
- 556: third welding electrode
- 558: fourth welding electrode

## Claims

1. An arc welding system (110) comprising:
a wire feeding mechanism (114) for delivering welding wire (150) to a welding operation, and
a welding power supply (112) for generating a current for welding to the welding wire (150),
at least two distinct types of welding wire electrodes (152, 154)
**characterized in that** both of the at least the two types of welding electrodes (152, 154) are both some type of flux cored electrode,
and, **in that** the at least the two types of welding electrodes (152, 154) are of different chemical composition.

2. The arc welding system of Claim 1 where the at least the two types of welding electrodes (152, 154) are of different size.

3. The arc welding system of Claim 1 where the wire feeding mechanism (114) includes at least two drive motors.

4. The arc welding system of Claim 1 where the welding power supply (212) includes at least two power sources (214, 220).

5. The arc welding system of Claim 1 where the wire feeding mechanism includes a tandem wire feeder (314, 414, 514).

6. The arc welding system of Claim 1 where the wire feeding mechanism (114) includes a twin wire feeder (140, 440).

7. A method of operating a welding system (110) comprising:
(a.) providing an arc welding system (110) including a wire feeding mechanism for delivering welding wire (150) to a welding operation, and a welding power supply (112) for generating a current for welding to the welding wire (150),
(b.) delivering at least two distinct types of welding electrodes (152, 154) with the wire feeding mechanism,
(c.) generating a welding current with the welding power supply (112) for providing to the at least two distinct types of welding electrodes (152, 154) for welding, and
(d.) creating a weld on a work piece (160, 260) with the at least two distinct types of welding electrodes **characterized in that** both of the at least the two types of welding electrodes (152, 154) are both some type of flux cored electrode; and where the at least the two types of welding electrodes (152, 154) are of different chemical composition.

8. The method of Claim 9 where the delivering of the at least two distinct types of welding electrodes (152, 154) results in a deposition rate greater than 6,804 kg/hr (15 lbs/hr).

9. The method of Claim 7 where the at least the two types of welding electrodes (152, 154) are of different size.

10. The method of one of the Claims 7 to 9 where the wire feeding mechanism (114) includes at least two drive motors; and/or where the welding power supply (110) includes at least two power sources (214, 220).

11. The method of one of the Claims 7 to 10 where the wire feeding mechanism (114) includes a tandem wire feeder (314, 414, 514); and/or where the wire feeding mechanism includes a twin wire feeder (140, 440).

## Patentansprüche

1. Lichtbogenschweißsystem (110), das Folgendes umfasst:
einen Drahtzufuhrmechanismus (114) zum Zuführen von Schweißdraht (150) zu einem Schweißvorgang, und
eine Schweißstromversorgung (112) zum Erzeugen eines Stroms zum Schweißen zu dem Schweißdraht (150),
mindestens zwei voneinander verschiedene Arten von Schweißelektroden (152, 154),
**dadurch gekennzeichnet, dass** beide der mindestens zwei Arten von Schweißelektroden (152, 154) von einer Art von Flussmittelkernelektrode sind, und
dadurch, dass die mindestens zwei Arten von Schweißelektroden (162, 164) von unterschiedlicher chemischer Zusammensetzung sind.

2. Lichtbogenschweißsystem nach Anspruch 1, wobei die mindestens zwei Arten von Schweißelektroden (152, 154) von unterschiedlicher Größe sind.

3. Lichtbogenschweißsystem nach Anspruch 1, wobei der Drahtzufuhrmechanismus (114) mindestens zwei Antriebsmotoren enthält.

4. Lichtbogenschweißsystem nach Anspruch 1, wobei die Schweißstromversorgung (212) mindestens zwei Stromquellen (214, 220) enthält.

5. Lichtbogenschweißsystem nach Anspruch 1, wobei der Drahtzufuhrmechanismus eine Tandem-Drahtzuführvorrichtung (314, 414, 514) enthält.

6. Lichtbogenschweißsystem nach Anspruch 1, wobei der Drahtzufuhrmechanismus eine Zwillings-Drahtzuführvorrichtung (140, 40) enthält.

7. Verfahren zum Betreiben eines Schweißsystems (110), das Folgendes umfasst:
(a.) Bereitstellen eines Lichtbogenschweißsystems (110), das einen Drahtzufuhrmechanismus zum Zuführen von Schweißdraht (150) zu einem Schweißvorgang und eine Schweißstromversorgung (112) zum Erzeugen eines Stroms zum Schweißen des Schweißdrahtes (150) enthält;
(b.) Zuführen mindestens zweier unterschiedlicher Arten von Schweißelektroden (152, 154) mit dem Drahtzufuhrmechanismus;
(c.) Erzeugen eines Schweißstroms mit der Schweißstromversorgung (112) zum Übertragen zu den mindestens zwei unterschiedlichen Arten von Schweißelektroden (152, 154) zum Schweißen; und
(d.) Herstellen einer Schweißnaht an einem Werkstück (160, 260) mit den mindestens zwei unterschiedlichen Arten von Schweißelektroden;
**dadurch gekennzeichnet, dass**
beide der mindestens zwei unterschiedlichen Arten von Schweißelektroden (152, 154) von einer Art Flussmittelkernelektrode sind; und wobei die mindestens zwei Arten von Schweißelektroden (152, 154) von unterschiedlicher chemischer Zusammensetzung sind.

8. Verfahren nach Anspruch 6, wobei das Zuführen der mindestens zwei unterschiedlichen Arten von Schweißelektroden (152, 154) eine Abscheidungsrate von mehr als 6,804 kg/h (15 lbs/hr) zur Folge hat.

9. Verfahren nach Anspruch 7, wobei die mindestens zwei Arten von Schweißelektroden (152, 154) von unterschiedlicher Größe sind.

10. Verfahren nach einem der Ansprüche 7 bis 9, wobei der Drahtzufuhrmechanismus (114) mindestens zwei Antriebsmotoren enthält; und/oder wobei die Schweißstromversorgung (110) mindestens zwei Stromquellen (214, 220) enthält.

11. Verfahren nach einem der Ansprüche 7 bis 10, wobei der Drahtzufuhrmechanismus (114) eine Tandem-Drahtzuführvorrichtung (314, 414, 514) enthält; und/oder wobei der Drahtzufuhrmechanismus eine Zwillings-Drahtzuführvorrichtung (140, 40) enthält.

## Revendications

1. Système de soudage à l'arc (110) comprenant :
un mécanisme d'alimentation de fil (114) pour fournir un fil de soudage (150) à une opération de soudage, et
une alimentation électrique de soudage (112) pour générer un courant pour un soudage au fil de soudage (150),
au moins deux types distincts d'électrodes de soudage (152, 154),
**caractérisé en ce que** l'ensemble des au moins deux types d'électrodes de soudage (152, 154) sont un type d'électrode à fil fourré,
et **en ce que** les au moins deux types d'électrodes de soudage (152, 154) sont de composition chimique différente.

2. Système de soudage à l'arc selon la revendication 1, dans lequel les au moins deux types d'électrodes de soudage (152, 154) sont de tailles différentes.

3. Système de soudage à l'arc selon la revendication 1, dans lequel le mécanisme d'alimentation de fil (114) comprend au moins deux moteurs d'entraînement.

4. Système de soudage à l'arc selon la revendication 1, dans lequel l'alimentation électrique de soudage (212) comprend au moins deux sources d'alimentation électrique (214, 220).

5. Système de soudage à l'arc selon la revendication 1, dans lequel le mécanisme d'alimentation de fil comprend un dévidoir de fil en tandem (314, 414, 514).

6. Système de soudage à l'arc selon la revendication 1, dans lequel le mécanisme d'alimentation de fil (114) comprend un dévidoir de fil jumeau (140, 440).

7. Procédé de fonctionnement d'un système de soudage (110) comprenant :
(a.) la fourniture d'un système de soudage à l'arc (110) comprenant un mécanisme d'alimentation de fil pour fournir un fil de soudage (150) à une opération de soudage, et une alimentation électrique de soudage (112) pour générer un courant pour un soudage au fil de soudage (150),
(b.) la fourniture d'au moins deux types distincts d'électrodes de soudage (152, 154) avec le mécanisme d'alimentation de fil,
(c.) la génération d'un courant de soudage avec l'alimentation électrique de soudage (112) à fournir aux au moins deux types distincts d'électrodes de soudage (152, 154) pour un soudage, et
(d.) la création d'une soudure sur une pièce d'ouvrage (160, 260) avec les au moins deux types distincts d'électrodes de soudage (152, 154),
**caractérisé en ce que** l'ensemble des au moins deux types d'électrodes de soudage (152, 154) sont d'un type d'électrode à fil fourré ; et dans lequel les au moins deux types d'électrodes de soudage (152, 154) sont de composition chimique différente.

8. Procédé selon la revendication 9, dans lequel la fourniture des au moins deux types distincts d'électrodes de soudage (152, 154) engendre une vitesse de dépôt supérieure à 6,804 kg/h (15 lb/h).

9. Procédé selon la revendication 7, dans lequel les au moins deux types d'électrodes de soudage (152, 154) sont de tailles différentes.

10. Procédé selon l'une des revendications 7 à 9, dans lequel le mécanisme d'alimentation de fil (114) comprend au moins deux moteurs d'entraînement ; et/ou dans lequel l'alimentation électrique de soudage (110) comprend au moins deux sources d'alimentation électrique (214, 220).

11. Procédé selon l'une des revendications 7 à 10, dans lequel le mécanisme d'alimentation de fil (114) comprend un dévidoir de fil en tandem (314, 414, 514) ; et/ou dans lequel le mécanisme d'alimentation de fil comprend un dévidoir de fil jumeau (140, 440).
